Europäisches Patentamt

European Patent Office

Office européen des brevets

(11) Numéro de publication : **0 193 478**
**B1**

# (12) FASCICULE DE BREVET EUROPÉEN

(45) Date de publication du fascicule du brevet :
11.01.89

(21) Numéro de dépôt : 86420044.9

(22) Date de dépôt : 13.02.86

(51) Int. Cl.⁴ : **D 03 D 15/00**

(54) Armature textile utilisable pour la réalisation de complexes stratifiés.

(30) Priorité : 22.02.85 FR 8502783

(43) Date de publication de la demande :
03.09.86 Bulletin 86/36

(45) Mention de la délivrance du brevet :
11.01.89 Bulletin 89/02

(84) Etats contractants désignés :
AT BE CH DE GB IT LI

(56) Documents cités :
FR--A-- 775 538
FR--A-- 1 394 271
FR--A-- 1 448 255
FR--A-- 1 469 065
FR--A-- 1 502 610
FR--A-- 2 034 787
FR--A-- 2 214 000
FR--A-- 2 425 487
US--A-- 2 164 925
US--A-- 2 887 132
US--A-- 3 818 082

(73) Titulaire : ETABLISSEMENTS LES FILS D'Auguste
CHOMARAT et Cie Société anonyme
7, rue Roy
F-75008 Paris (FR)

(72) Inventeur : Fourezon, André
Mariac
F-07160 Le Cheylard (FR)

(74) Mandataire : Laurent, Michel et al
Cabinet LAURENT et GUERRE B.P. 32
F-69131 Ecully Cédex (FR)

Jouve, 18, rue St-Denis, 75001 Paris, France

## Description

L'invention concerne un perfectionnement apporté aux armatures textiles utilisées pour la réalisation de complexes stratifiés, c'est-à-dire d'articles à base de résine (polyester ou autres), armés par une nappe textile de renforcement constituée par un tissu, une grille un non tissé ou une combinaison de tels éléments.

Il a été constaté depuis très longtemps ainsi que cela ressort notamment du brevet français 1 394 271 au nom du Demandeur qu'il était nécessaire pour obtenir un complexe stratifié qui soit de bonne qualité, d'utiliser comme armature textile de renforcement un article qui dans le cas d'un tissu, doit être tel que les fils de chaîne et les fils de trame aient entre eux le moins possible de points de croisement afin qu'en évitant les ondulations de leur chevauchement, ils soient le plus droit et le plus plat possible.

Un tel résultat est difficile à obtenir directement par tissage ainsi que cela ressort clairement du préambule de ce document. Par suite, diverses solutions ont été proposées pour obtenir des nappes dans lesquelles les fils élémentaires ne présentent pas de points de croisement entre eux. Parmi ces solutions, on peut citer celle faisant l'objet du brevet français n° 1 394 271 précité ou du brevet français n° 1 469 065 également au nom du Demandeur, qui consistent à réaliser une nappe selon laquelle les fils, en verre par exemple, sont disposés suivant une même direction longitudinale, ces fils étant liés entre eux soit chimiquement (brevet français 1 394 271), soit au moyen d'une couture (brevet français 1 469 065).

Il a également été proposé de réaliser une nappe qui contrairement aux précédentes, est constituée pour majorité de fibres de verre s'étendant transversalement par rapport à la longueur de la dite nappe, les fils étant liés entre eux par une chaîne de liage, lâche, permettant de maintenir les fils de trame parallèlement les uns aux autres.

Dans les deux cas, on obtient des nappes dites « unidirectionnelles ».

Outre le problème du maintien le plus droit et le plus plat possible des fils élémentaires, problème qui se trouve résolu lorsqu'ils ne s'entrecroisent pas comme dans le cas des brevets français 1 394 271 et 1 469 065 précités, se pose également celui de la découpe lorsque l'on réalise le stratifié proprement dit. En effet, on a constaté que lors de cette découpe, les fils longitudinaux pouvaient se déplacer les uns par rapport aux autres. Certes les solutions décrites dans les deux brevets français précités permettent, dans une certaine mesure, d'obtenir un bon blocage des fils longitudinaux mais elles présentent cependant comme inconvénient d'être relativement délicates à réaliser. Un tel problème, qui se trouve également dans le cas de tissus bidirectionnels ainsi que cela ressort du FR-A-2 425 487 pourrait être résolu, d'une manière similaire aux enseignements du FR-A-2 214 000 en réalisant le liage des fils de chaîne parallèles au moyen de fils de trame espacés, ces fils de trame étant constitués de fils thermofusibles (par exemple du type âme/gaine) dont les propriétés thermocollantes sont révélées après tissage. Cependant, dans un tel cas, on se retrouve ramenés aux inconvénients des solutions antérieures, étant donné que si l'on veut avoir un bon liage, il sera nécessaire d'utiliser un fil de trame de diamètre relativement important si l'on veut avoir une bonne surface de contact, ce qui entraînera donc une ondulation des fils de chaîne autour des dits fils de trame de liage et par suite, ne permettra pas de les maintenir le plus droit et le plus plat possible.

Or, on a trouvé, et c'est ce qui fait l'objet de la présente invention qu'il était possible de résoudre ces deux problèmes en utilisant, pour lier les dits fils longitudinaux entre eux, des fils de trame tissés lâches avec les dits fils longitudinaux et constitués de fils à base d'une matière thermofusible permettant, après traitement thermique d'obtenir un maintien parfait des dits fils longitudinaux les uns par rapport aux autres et ce sans nuire aux propriétés mécaniques du stratifié formé l'armature conforme à l'invention étant caractérisée par le fait que le tissage est réalisé de façon à ce que les fils de trame de liage soient regroupés par paires espacées les unes des autres, les dits fils de trame de liage très fins par rapport aux fils longitudinaux.

Comme matières textiles permettant de réaliser de telles nappes, on peut utiliser tout fil employé couramment pour de telles applications, par exemple du fil de verre, du fil de carbone, des fils aramides tels que ceux commercialisés sous la marque « KEVLAR »...

Par ailleurs, comme fil de trame thermofusible de liage, on utilisera toute matière compatible avec les résines à renforcer. On peut, par exemple, utiliser un fil à base de copolyamide tels que ceux commercialisés sous la marque « GRILON » et dont la zone de fusion se situe entre 70 et 150 °C, ces fils pouvant être soit des multifilaments soit des monofilaments. On utilisera cependant de préférence des fils à âme, comportant une âme à base d'une matière similaire à ceux des fils de chaîne (par exemple, verre ou aramide), enrobée d'une couche de matière thermofusible telle qu'une couche de polyamide.

Grâce à une telle solution, il est possible, conformément à l'invention, c'est-à-dire en regroupant les fils de liage par paires espacées les unes des autres, d'avoir une très bonne liaison fils longitudinaux/fils de trame, mais également d'utiliser des fils de liage très fins, ce qui limite l'ondulation des fils longitudinaux tout en assurant une bonne surface de contact permettant une excellente liaison étant donné qu'alors, le liage se fait ainsi pratiquement sur une surface plane (déterminée par les deux génératrices des deux fils de chaque paire de trames) ce qui, compte-tenu des enseignements de l'état de la technique, n'aurait pu être obtenu qu'en utilisant un fil de trame d'un diamètre nettement supérieur qui aurait obligatoirement entraîné une forte ondulation des fils longitudinaux afin d'empêcher de les maintenir le plus droit et le plus plat possible.

Par ailleurs, un tel mode de réalisation permet d'obtenir non seulement une nappe de fils de chaîne ayant une densité (épaisseur) constante sur toute leur largeur, mais également si on le désire, des nappes pouvant présenter des zones à densité variable, de manière régulière ou non sur la largeur de l'article.

L'invention et les avantages qu'elle apporte seront cependant mieux compris grâce aux exemples de réalisation donnés ci-après à titre indicatif mais non limitatif et qui sont illustrés par les figures annexées qui sont des reproductions d'armatures textiles réalisées conformément à l'invention.

Si l'on se reporte aux schémas annexés, schémas dans lesquels les mêmes références ont été utilisées pour désigner les mêmes éléments, le matériau conforme à l'invention est constitué d'une nappe de fils longitudinaux (1) liés entre eux par des fils de trame (2a, 2b) tissés lâches avec les dits fils longitudinaux (1).

Les fils longitudinaux (1) sont à base de fils conventionnels utilisés pour la réalisation de structures stratifiées, tels que fils de verre, polyamides, carbone.. .

Les fils de trame de liage (2a, 2b) sont, quant à eux, constitués de fils thermofusibles dont les propriétés collantes sont révélées après tissage par traitement thermique.

Un tel matériau est réalisé sur un métier à tisser conventionnel, l'armure choisie étant telle que les dits fils de trame de liage sont regroupés par paires ainsi que cela ressort clairement des figures annexées.

Exemple 1 :

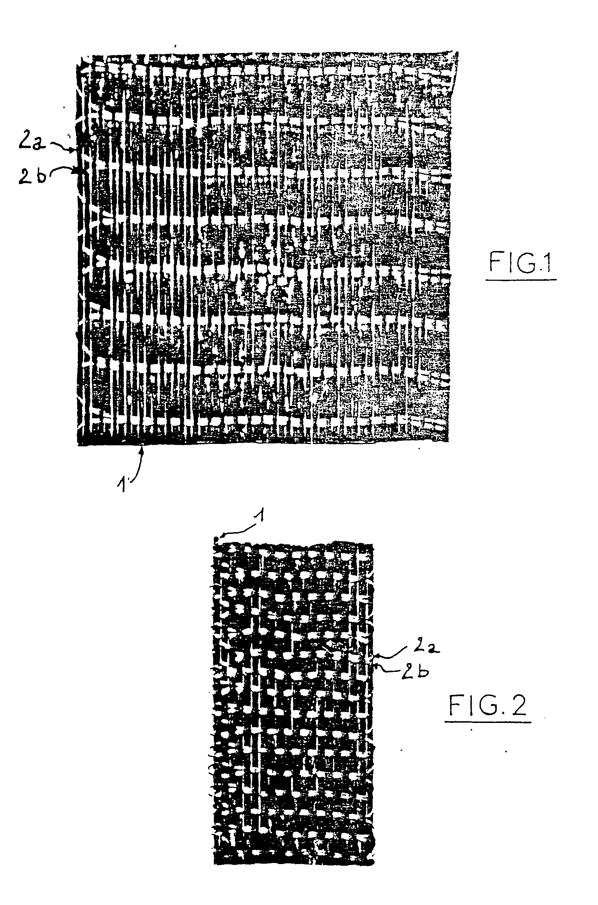

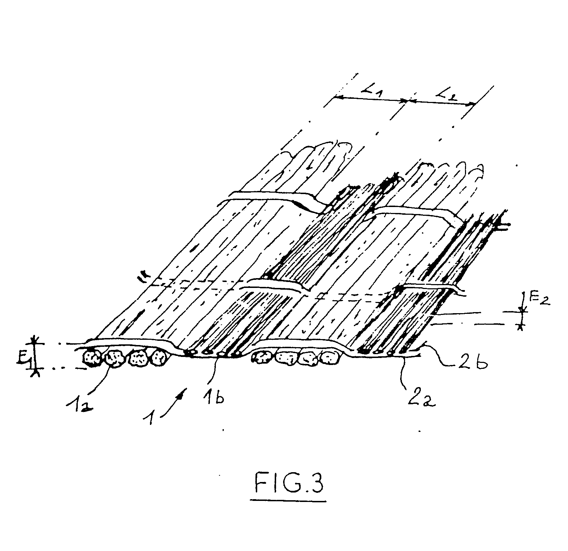

Sur un métier à tisser conventionnel, on réalise une structure conforme à l'invention du type illustré par la figure 1.

On utilise comme fils de chaîne (1) les fils de verre ayant un titre d'environ 1200 Dtex et comme fils de trame (2a, 2b) des fils thermofusibles constitués de fils GRILON, type K 115, dont le point de fusion est compris entre 70 et 120 °C. Ces fils thermofusibles sont des monofilaments ayant un diamètre de 0,15 mm.

La nappe formée a une largeur de neuf centimètres et comporte 54 fils longitudinaux et le tissage est réalisé de telle sorte que les fils thermofusibles (2) soient regroupés par paires distantes les unes des autres de un centimètre environ.

A la tombée du métier, on obtient une structure tissée dans laquelle les fils longitudinaux (1) sont maintenus emprisonnés par les fils de liage (2a, 2b). Après tissage, on effectue un traitement thermique à environ 175 °C qui provoque la fusion des fils de liage (2a, 2b) et conduit à un ensemble dans lequel les fils longitudinaux (1) sont maintenus parfaitement positionnés les uns par rapport aux autres.

Un tel matériau peut être facilement stocké, découpé et manipulé, les fils longitudinaux étant par ailleurs pratiquement plats, sans ondulation.

Exemple 2 :

D'une manière similaire à l'exemple précédent, on réalise un tissu se présentant sous la forme d'une bande ayant une largeur de quatre centimètres et qui, dans le cas présent, est constituée, de vingt mèches (1) d'un fil commercialisé sous la marque KEVLAR 49/235 Tex.

Les fils longitudinaux (1) sont liés entre eux par des trames de liage (2a 2b), tissés également de manière à être regroupés par paires distantes les unes des autres d'environ 0,5 cm. Ces fils de trame de liage (2a, 2b) sont à base de fils de verre d'un titre de 70 Dtex gainés de polyamide.

Après tissage, l'article est traité thermiquement à une température d'environ 175 °C, ce qui provoque la fusion de la gaine en polyamide et le liage des fils longitudinaux (1) qui ne peuvent pas être déplacés les uns par rapport aux autres et sont pratiquement rectilignes.

Comme l'article précédant un tel matériau peut être facilement stocké manipulé et sa découpe peut être réalisée sans aucune difficulté.

Exemple 3 :

Cet exemple est illustré par la figure 3 qui montre une variante d'une armature textile conforme à l'invention, qui, par rapport aux deux articles vus précédemment, comporte des fils de chaîne (1) se présentant sous la forme de bandes (1a, 1b) de largeurs L1, L2 identiques ou différentes et d'épaisseurs E1, E2 différentes. Ces fils de chaîne (1a, 1b) sont liés entre eux, conformément à l'invention, par des fils de trames de liage (2a, 2b) tissés également de manière à être regroupés par paires distantes les unes des autres d'environ 0,5 centimètre. Ces fils de trame de liage sont similaires à ceux utilisés dans l'exemple 2.

Après tissage et le traitement thermique provoquant la fusion de la gaine en polyamide, on obtient une structure textile comportant des bandes d'épaisseurs variables. Un tel article, peut comme précédemment, être facilement stocké, manipulé et découpé, les fils longitudinaux étant rectilignes et pratiquement sans ondulation.

Les exemples qui précèdent montrent bien les avantages apportés par l'invention et notamment le fait qu'il est possible d'obtenir de manière simple des armatures textiles constituées pour partie majoritaire de fils disposés dans le sens longitudinal, dont la découpe et la mise en oeuvre est aisée, les dits fils longitudinaux étant par ailleurs, maintenus le plus droit et le plus plat possible, l'épaisseur des dites nappes pouvant être soit constante sur toute la largeur de l'article, soit être variable de manière régulière ou non.

Bien entendu, l'invention n'est pas limitée aux exemples de réalisation décrits précédemment mais elle en couvre toutes les variantes réalisées dans le même esprit.

Ainsi, un tel matériau pourrait être utilisé pour d'autres applications que le renforcement de résine, par exemple comme support de bitume ou d'enductions diverses.

**Revendications**

1. Armature textile utilisable pour la réalisation de complexes stratifiés, du type constitué par une nappe de fils longitudinaux (1) liés entre eux par des fils de trame (2a, 2b) tissés lâches avec les dits fils longitudinaux (1), ces fils de trame de liage étant constitués de fils thermofusibles dont les propriétés thermocollantes sont révélées après tissage, caractérisée par le fait que le tissage est réalisé de façon à ce que les fils de trame de liage soient regroupés par paires espacées les unes des autres, les dits fils de trame de liage étant très fins par rapport aux fils longitudinaux.

2. Armature textile selon la revendication 1 caractérisée par le fait que les fils longitudinaux sont à base de verre, polyaramides, ou carbone.

3. Armature textile selon l'une des revendications 1 et 2, caractérisée par le fait que les fils de trame de liage sont des fils du type âme/gaine, l'âme étant de même nature que les fils de chaîne.

4. Armature textile selon l'une des revendications 1 à 3, caractérisée par le fait que la densité (épaisseur) des fils longitudinaux est régulière sur toute la largeur de l'article.

5. Armature textile selon l'une des revendications 1 à 3, caractérisée par le fait que la densité (épaisseur) varie de manière régulière ou non sur toute la largeur de l'article.

**Claims**

1. Textile reinforcement for manufacturing layered products, of the type constituted by a web of longitudinal yarns (1) bound together by weft yarns (2a, 2b) loosely woven with said longitudinal yarns (1), said binding weft yarns being constituted of heat-meltable yarns of which the thermobinding properties are revealed after weaving, characterized by the fact that the weaving is produced in such a way that the weft yarns are regrouped in spaced apart pairs, said binding weft yarns being very fine with respect to the longitudinal yarns.

2. Textile reinforcement according to claim 1, characterized by the fact that the longitudinal yarns are based on glass, polyaramides, or carbon.

3. Textile reinforcement according to one of claims 1 and 2, characterized by the fact that the binding weft yarns are yarns of the core/sheath type, the core being of the same nature as the warp yarns.

4. Textile reinforcement according to one of claims 1 to 3, characterized by the fact that the density (thickness) of the longitudinal yarns is regular throughout the width of the article.

5. Textile reinforcement according to one of claims 1 to 3, characterized by the fact that the density (thickness) varies either regularly or unregularly throughout the width of the article.

**Patentansprüche**

1. Textile Armierung zur Herstellung von Schichtstoffen, die aus einer Schicht an längsverlaufenden Fäden (1) aufgebaut ist, die untereinander über Schußfäden (2a, 2b) verbunden sind, die locker mit den längsverlaufenden Fäden (1) gewoben sind, wobei die Bindungsschußfäden aus bei Wärme schmelzenden Fäden gebildet sind, deren Wärmeklebeeigenschaften nach dem Weben zur Geltung gebracht werden, dadurch gekennzeichnet, daß das Weben derart durchgeführt wird, daß die Bindungsschußfäden als voneinander beabstandete Paare zusammengelegt sind, wobei die Bindungsschußfäden im Vergleich zu den längsverlaufenden Fäden sehr dünn sind.

2. Textile Armierung nach Anspruch 1, dadurch gekennzeichnet, daß die längsverlaufenden Fäden auf Basis von Glas, Polyacrylamiden oder Kohle aufgebaut sind.

3. Textile Armierung nach Anspruch 1 oder 2, dadurch gekennzeichnet, daß die Bindungsschußfäden vom Kern/Mantel-Typ sind, deren Kern von derselben Art wie die Kettfäden ist.

4. Textile Armierung nach einem der Ansprüche 1 bis 3, dadurch gekennzeichnet, daß die Dichte (Dicke) der längsverlaufenden Fäden über die gesamte Breite des Artikels gleichmäßig ist.

5. Textile Armierung nach einem der Ansprüche 1 bis 3, dadurch gekennzeichnet, daß sich die Dichte (Dicke) gleichmäßig oder ungleichmäßig über die gesamte Breite des Artikels ändert.

2a

2b

1

_FIG.1_

1

2a

2b

_FIG.2_

FIG.3